Europäisches Patentamt

European Patent Office

Office européen des brevets

(19)

(11) **EP 0 742 181 A1**

(12) **DEMANDE DE BREVET EUROPEEN**

(43) Date de publication:
13.11.1996 Bulletin 1996/46

(51) Int. Cl.⁶: $C04B\ 35/486$, $G21B\ 1/00$, $C01G\ 25/00$

(21) Numéro de dépôt: 96400987.2

(22) Date de dépôt: 09.05.1996

(84) Etats contractants désignés:
DE IT NL

(30) Priorité: 11.05.1995 FR 9505582

(71) Demandeurs:
• COMMISSARIAT A L'ENERGIE ATOMIQUE
75015 Paris (FR)
• FRAMATOME
92400 Courbevoie (FR)
• COMPAGNIE GENERALE DES MATIERES
NUCLEAIRES
F-78140 Velizy Villacoublay (FR)

(72) Inventeurs:
• Abraham, Francis
59242 Genech (FR)

• Blouet, Pierre
75020 Paris (FR)
• Boivin, Jean-Claude
59150 Wattrelos (FR)
• Boncoeur, Marcel
75012 Paris (FR)
• Rasneur, Bernard
78320 Le Mesnil St Denis (FR)
• Roux, Nicole
75014 Paris (FR)

(74) Mandataire: Dubois-Chabert, Guy et al
c/o BREVATOME
25, rue de Ponthieu
75008 Paris (FR)

(54) **Céramique à base de zirconate de lithium substitué par du cuivre, utilisable comme matériau tritigène**

(57) L'invention concerne des matériaux céramiques utilisables comme matériau tritigène dans un réacteur de fusion thermonucléaire. Ces matériaux sont constitués de zirconate de lithium substitué par du cuivre sous la forme de solutions solides du type $Li_2ZrO_3$, dont les compositions sont situées dans la zone hachurée du diagramme ternaire représenté ci-dessous.

De préférence, ils répondent à la formule :

$$Li_2\left(1-\frac{x}{3}\right)Zr\left(1-\frac{x}{3}\right)Cu_xO_3 \text{ avec } 0 < x \leq 0,8$$

FIG. 1

EP 0 742 181 A1

## Description

La présente invention a pour objet des matériaux céramiques à base de zirconate de lithium, utilisables en particulier comme matériau tritigène dans tous les dispositifs produisant du tritium, notamment pour la couverture des réacteurs de fusion nucléaire contrôlée.

Les matériaux tritigènes utilisables dans de tels réacteurs doivent posséder en particulier les caractéristiques suivantes :

1) être stables aux températures de fonctionnement du réacteur, qui sont généralement de 400 à 700°C,
2) présenter une résistance mécanique convenable,
3) assurer la production et le relâchement du tritium, celui-ci étant produit par la réaction nucléaire :

$$n + {}^6Li \rightarrow {}^3_1 T + {}^4_2 He,$$

4) être stables sous rayonnement neutronique, et
5) ne pas donner de radio-isotopes à période longue.

Pour cette application, on a déjà envisagé d'utiliser des céramiques à base d'aluminate de lithium et de zirconate de lithium $Li_2ZrO_3$, comme il est décrit par B. Rasneur dans Advances in Ceramics, volume 27, 1990, pages 63 à 76.

Le zirconate de lithium stoechiométrique est en particulier l'un des meilleurs matériaux utilisables pour constituer la couverture des réacteurs de fusion. Il présente en effet des caractéristiques mécaniques adéquates et une température de relâchement du tritium relativement basse, il est stable thermiquement et sa tenue sous rayonnement neutronique jusqu'à 8 % de taux de combustion est satisfaisante.

Cependant, la consommation du lithium lors de l'irradiation, qui pourrait atteindre 10 à 20 % du lithium initialement contenu dans le matériau (dans un réacteur commercial), conduit à une céramique biphasée constituée à la fois de zircone et de zirconate à la suite de la transformation selon le schéma suivant :

$$Li_2ZrO_3 + n \rightarrow Li_2ZrO_3 + ZrO_2 + T_2O \text{ (récupéré).}$$

L'apparition de zircone dans la matériau est susceptible de fragiliser la céramique en dégradant la cohésion des grains qui la constituent.

La présente invention a précisément pour objet de nouveaux matériaux céramiques à base de zirconate de lithium qui permettent d'éviter de telles modifications structurales au cours de la consommation du lithium.

Selon l'invention, ce matériau est constitué de zirconate de lithium substitué par du cuivre en quantité telle que le matériau soit sous la forme d'une solution solide de type $Li_2ZrO_3$.

Cette substitution par le cuivre permet, d'une part de conserver la structure du zirconate de lithium lors de la consommation du lithium et, d'autre part, d'améliorer la capacité de la céramique au relâchement du tritium, en abaissant la température à laquelle se produit le maximum de relâchement du tritium.

D'autres caractéristiques et avantages de l'invention apparaîtront mieux à la lecture de la description qui suit, donnée bien entendu à titre illustratif et non limitatif en référence aux figures annexées.

La figure 1 illustre une partie du diagramme ternaire des compositions céramiques $ZrO_2$, $Li_2O$ et $CuO$, située autour de la zone qui correspond au domaine des solutions solides de type $Li_2ZrO_3$.

La figure 2 illustre schématiquement une installation pour tester les propriétés d'un matériau céramique conforme à l'invention, en ce qui concerne le relâchement du tritium.

Les figures 3 et 4 sont des diagrammes illustrant le flux de tritium relâché en fonction de la température dans le cas de deux matériaux conformes à l'invention.

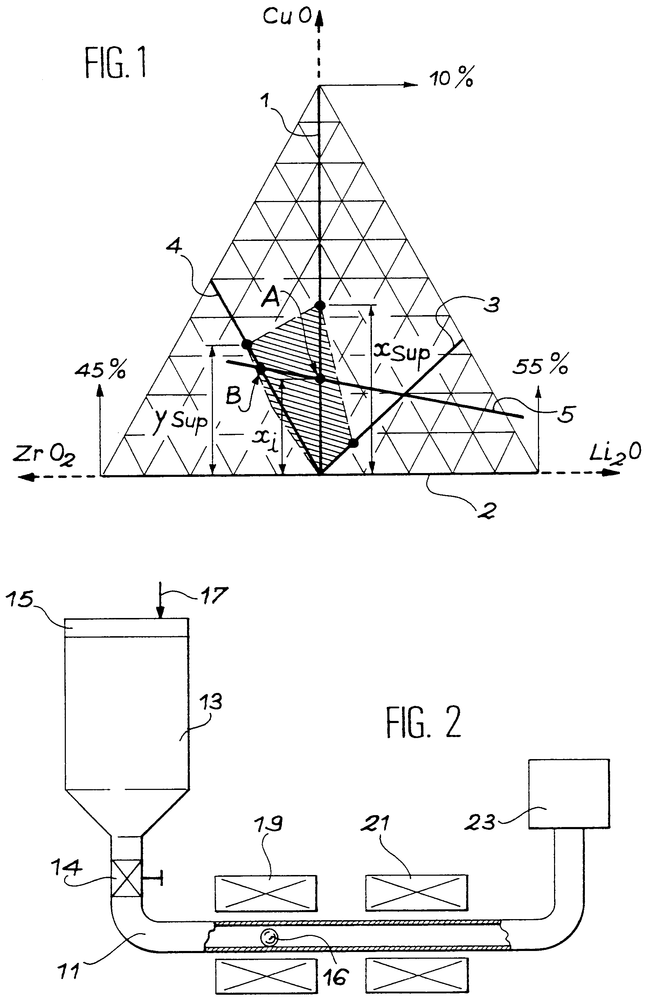

Sur la figure 1, on a représenté la zone intéressante du diagramme ternaire des compositions céramiques comprenant $ZrO_2$, $CuO$ et $Li_2O$, qui comporte le domaine de solution solide de type $Li_2ZrO_3$ représenté sur le dessin par la zone hachurée.

Sur ce diagramme la ligne 1 est la ligne médiane qui joint le sommet $CuO$ (non représenté sur le dessin) au côté opposé 2 du diagramme ternaire, une partie seulement de ce côté étant représentée, soit la portion qui va de 45 % de $Li_2O$ à 55 % de $Li_2O$. Sur cette figure 1, la ligne 1 correspond au mécanisme de substitution dans lequel on a toujours le même rapport $Li_2O/ZrO_2$, ce qui correspond à la formule

$$Li_{2(1-x/3)}Zr_{(1-x/3)}Cu_xO_3$$

Le mécanisme de substitution est le suivant :

$$\tfrac{2}{3}xLi^+ + \tfrac{1}{3}xZr^{4+} \rightarrow xCu^{2+}$$

Un autre mode de substitution est représenté par la ligne 3 de la figure 1, cette substitution correspond à la formule :

$$Li_{2(1+x)}Zr_{(1-x)}M_xO_3$$

soit au remplacement de $xZrO_2$ par $x/2$ Cu0 et $xLi_2O$, c'est-à-dire au mécanisme :

$$xZr^{4+} \rightarrow xCu^{2+} + 2xLi^+$$

Il s'agit dans ce cas d'une insertion de cations en position interstitielle.

La ligne 4 de la figure 1 correspond à la formule :

$$Li_{2(1-x)}Cu_xZrO_3.$$

soit au remplacement de $Li_2O$ par CuO selon le mécanisme :

$$2xLi^+ \rightarrow xCu^{2+} + x\,\square$$

Cette dernière substitution entraîne la création de lacunes cationiques dans la structure, mécanisme à priori favorable à la mobilité cationique.

Sur la figure 1, on voit que la substitution par $Cu^{2+}$ dans la structure du zirconate de lithium engendre un domaine de solutions solides assez vaste, puisqu'il s'étend jusqu'à $x = 0,08$ sur la ligne 1, jusqu'à 0,06 sur la ligne 4 correspondant à la structure lacunaire et jusqu'à $x = 0,04$ sur la ligne 3 de substitution en position interstitielle.

Selon l'invention, on peut choisir à priori la composition du matériau céramique dans tout le domaine de solutions solides représenté, mais on préfère utiliser un matériau dont la composition se situe sur la ligne 1, car ces matériaux présentent des caractéristiques mécaniques et microstructurales intéressantes (microstructure fine et résistance mécanique du même ordre que celle du zirconate non substitué).

Lors de l'irradiation d'un matériau céramique de ce type, la consommation du lithium par la réaction neutronique conduit à une modification de la composition, qui correspond à un déplacement vers la ligne de substitution lacunaire 4 (compositions moins riches en lithium), ce déplacement se situant sur la ligne qui relie le point figurant la composition du matériau de départ à celui qui correspond au sommet du diagramme ternaire ($Li_2O$) non représenté sur ce dessin.

En désignant par $x_i$ le taux de Cu dans la céramique de départ (point A) sur la ligne centrale 1 de la figure 1 du diagramme ternaire et en désignant par $x_{sup}$ la limite du domaine de solution solide sur cette ligne 1, $x_i$ doit alors satisfaire la relation $x_i \leq x_{sup}$ pour que la céramique soit effectivement dans le domaine de solution solide.

Elle a alors pour formule de composition :

$$Li_{2(1-x/3)}Zr_{(1-x/3)}Cu_xO_3 \text{ avec } 0<x\leq 0,08 \qquad\qquad (A)$$

La consommation du lithium lors de l'irradiation va déplacer le point $A(x_i)$ sur la ligne 5 reliant A au sommet $Li_2O$ du diagramme ternaire vers une valeur limite B située pratiquement sur la ligne 4 de solution solide lacunaire. A la fin de ce processus, la céramique aura alors pour formule :

$$Li_{2(1-y_i}ZrCu_{Y_i}O_3 \qquad\qquad (B)$$

où $(1-y_i)$ désigne la teneur en $Li_2O$ au point B.

Ce passage de A à B s'effectue suivant la ligne de consommation caractérisée par le rapport

$$\frac{ZrO_2}{ZrO_2+CuO} = \text{Constante.}$$

La relation liant $x_i$ et $y_i$ est donc donnée par :

$$\frac{1-\frac{1}{3}x_i}{1+\frac{2}{3}x_i} = \frac{1}{1+y_i} \text{ soit } y_i = \frac{x_i}{1-\frac{1}{3}x_i} \text{ ou } x_i = \frac{y_i}{1+\frac{1}{3}y_i}$$

La composition initiale peut donc s'écrire en fonction de $y_i$ :

$$Li_2ZrCu_{y_i}O_{3+y_i} \qquad (C)$$

Le départ du lithium par réaction nucléaire peut dont être symbolisé par le passage d'une céramique de composition

$$Li_2ZrCu_{y_i}O_{3+y_i} \quad (C)$$

à un autre matériau de formulation :

$$Li_{2(1-y_i)}ZrCu_{yi}O_3 \quad (B).$$

Il est alors évident que la consommation du lithium se fait par départ de $y_iLi_2O$.

Afin d'assurer la stabilité structurale de la céramique durant l'ensemble de ce processus, il faut que $y_i$ soit inférieur à $y_{sup}$ qui représente le taux limite de substitution en solution solide de la ligne (4) du diagramme ternaire. Cette relation implique alors que le taux de substitution initial soit tel que :

$$x_i \leq \frac{y_{sup}}{1+\frac{1}{3}y_{sup}} \leq x_{sup}.$$

Ainsi, la stabilité structurale obtenue par création de domaines de solution solide, peut être simplifiée au cas d'un passage de la ligne centrale (1) du ternaire à la ligne (4) de la solution solide lacunaire, ce qui implique que la céramique de départ réponde à la formule $Li_2ZrCu_yO_{3+y}$ avec $0<y\leq0,06$.

Les matériaux céramiques de l'invention peuvent être préparés par des procédés classiques à partir d'oxyde de zirconium, de carbonate de lithium et d'un sel de cuivre tel que le nitrate de cuivre.

Lorsque le matériau céramique a une composition qui se situe sur la ligne centrale 1 du diagramme ternaire, on prépare tout d'abord une poudre de zirconate de lithium $Li_2ZrO_3$ par les procédés habituels, puis on introduit le cuivre dans cette poudre par imprégnation au moyen d'une solution d'éthanol contenant un sel de cuivre, par exemple du nitrate de cuivre. La poudre traitée est ensuite soumise à un séchage, à une cuisson et à un tamisage avant d'être mise sous la forme voulue.

Lorsque la composition du matériau céramique se situe en dehors de cette ligne centrale 1, on peut partir d'une poudre de zircone que l'on imprègne par une solution de nitrate de cuivre dans l'éthanol et que l'on soumet ensuite à un séchage et à une cuisson, puis on mélange cette poudre de zircone qui contient le cuivre avec du carbonate de lithium et on prépare une poudre de zirconate par les techniques habituelles de cuisson, de tamisage, de mise en forme et de frittage.

A titre d'exemple, on décrit ci-après deux exemples de réalisation de matériaux céramiques conformes à l'invention.

**Exemple 1 : Préparation d'un matériau céramique comprenant 8 % de Cu.**

On part d'une zircone de haute pureté qui ne présente que de faibles traces d'hafnium, composé capteur de neutrons qui doit être totalement éliminé en vue des applications à la fusion nucléaire. La poudre de zircone a une surface spécifique de l'ordre de 15 $m^2/g$ et on la tamise à 400 $\mu m$.

Pour le lithium, on part d'une poudre de carbonate de lithium ayant une surface spécifique de 1 à 1,5 $m^2/g$ et on la tamise à une dimension de 200 $\mu m$. On mélange ensuite les poudres par brassage mécanique pendant 30 minutes environ, puis on porte le mélange de poudres à 700°C en 3 heures, on le maintient à cette température pendant 3 heures, puis on le laisse refroidir lentement jusqu'à 100°C. Après tamisage à 400 $\mu m$ et un nouveau brassage, on répète le même cycle de cuisson à 700°C. Ces deux cuissons permettent d'obtenir une décarbonatation complète du carbonate de lithium et la synthèse de la poudre de $Li_2ZrO_3$.

On fait subir alors à la poudre un nouveau cycle thermique comportant un brassage pendant 30 minutes et une cuisson à 800°C pendant 3 heures, ce qui assure une meilleure intégrité du compact pendant le frittage.

On imprègne alors la poudre de zirconate de lithium ainsi obtenue, par une solution d'éthanol contenant 200 9/l de nitrate de cuivre en effectuant la mise en contact pendant 30 minutes. On sèche ensuite la poudre imprégnée à 120°C, puis on cuit à 800°C pendant 3 heures, et on tamise à 400 $\mu$m.

Cette poudre contenant du cuivre est ensuite mise sous la forme de barreaux céramiques dans des gaines de caoutchouc d'un diamètre de 21 mm par compression dans une presse isostatique sous une pression de 300 MPa. Après compression, on élimine la gaine, puis on fritte les barreaux à une température de 925°C pendant 3 heures.

Le matériau céramique ainsi obtenu répond à la formule :

$$Li_{1,94}Zr_{0,97}Cu_{0,08}O_3.$$

et il présente une porosité de 22 % et une taille moyenne de grains de 2 $\mu$m.

**Exemple 2 : Préparation d'un matériau céramique répondant à la formule : $Li_2ZrCu_{0,05}O_{3,05}$.**

On suit le même mode opératoire que dans l'exemple 1 pour préparer ce matériau en utilisant pour l'imprégnation une solution contenant 200 g/l de nitrates de cuivre et en réalisant l'imprégnation pendant 30 minutes.

La poudre obtenue répond à la formule donnée ci-dessus et elle présente une porosité de 26 % et une taille de grains de 1 $\mu$m.

**Exemple 3 (comparatif) : Préparation de zirconate de lithium.**

Dans cet exemple, on suit le même mode opératoire que dans l'exemple 1 pour préparer un barreau de zirconate de lithium sauf que l'on n'effectue pas les étapes d'imprégnation, de séchage et de cuisson avant la compression isostatique.

On obtient ainsi, après frittage à 1000°C, du zirconate de lithium ayant une porosité de 27 % et une taille de grains de 1 $\mu$m.

**Exemple 4 :**

Dans cet exemple, on teste les propriétés de matériaux céramiques des exemples 1 à 3 pour le relâchement du tritium.

A partir des barreaux céramiques obtenus dans ces exemples, on réalise par usinage industriel sous courant d'eau distillée des cylindres pleins de diamètre et de hauteur égaux à 3 mm, puis on soumet ces cylindres à une usure sur papier de verre de manière à obtenir des billes régulières dont la masse est proche de 50 mg.

Chaque bille est ensuite introduite dans des tubes de quartz et dégazée à 650°C pendant 3 heures. On remplit ensuite les tubes d'hélium sous 200 torrs (27kPa) puis on les scelle. Les tubes scellés sont ensuite placés dans des conteneurs en aluminium pouvant contenir chacun 12 tubes et on introduit chaque conteneur dans un réacteur nucléaire pour soumettre les billes à une irradiation par un flux neutronique de $2,5.10^{13}$ neutrons/cm$^2$.s. au centre du conteneur.

De ce fait, étant donné que le conteneur contient les douze tubes, la valeur du flux neutronique est effectivement de $2,5.10^{13}$ neutrons/cm$^2$.s au centre du conteneur d'aluminium mais elle est divisée par deux à ces extrémités, où l'irradiation ne correspond plus qu'à un flux de $1,25.10^{13}$ neutrons/cm$^2$.s.

Ces conditions d'irradiation sont relativement douces pour ne pas induire dans le matériau céramique des températures suffisamment élevées pour entraîner l'extraction in situ du tritium formé. La majorité du tritium reste ainsi confinée avant les tests de relâchement.

Aprés 24 heures d'irradiation, on retire les tubes du réacteur et on les laisse refroidir pendant environ 6 semaines, pour éliminer les radiations intenses.

On soumet alors les tubes à un essai de relâchement du tritium dans le dispositif représenté sur la figure 2.

Ce dispositif comprend un tube de quartz 11 relié à l'une de ses extrémités à une dispositif de chargement 13 muni d'un couvercle étanche 15, d'un dispositif casse/tube (non représenté sur le dessin) et d'une arrivée de gaz vecteur 17. Le tube 11 traverse un premier four d'extraction 19 et un deuxième four réducteur 21 et il est relié à son autre extrémité à une chambre d'ionisation 23. Un robinet 14 permet de bloquer la bille dans le tube 11 avant son entrée dans la partie correspondant aux fours 19 et 21.

Pour réaliser l'essai, on opère de la façon suivante.

Le tube de quartz contenant la bille irradiée est cassé dans le dispositif de chargement 13. De ce fait les gaz tritiés sont entraînés dans le circuit par le gaz vecteur (hélium à 0,1 % d'hydrogène ou hélium seul) introduit en 17, tandis que la bille reste bloquée par le robinet strié 14. Les gaz tritiés passent par le four réducteur au zinc 21 porté à une température de 370°C où l'eau tritiée éventuellement formée lors de l'extraction est réduite en $T_2$ ou HT. Cette réduction évite tout risque de condensation sur les parois des canalisations du dispositif, qui entraînerait une mesure par défaut des quantités de tritium relâché. Le mélange constitué de gaz vecteur et des espèces ainsi formées passe alors dans la chambre d'ionisation 23 qui détecte par comptage des paires (He+, e-) l'émission β du tritium. Cette chambre permet de suivre à tout moment la quantité de tritium dans le gaz vecteur.

Avec cette première mesure, on détermine donc la quantité de tritium contenu dans le tube de quartz avant l'extraction du tritium contenu dans la bille d'échantillon. Dés que le signal de la chambre d'ionisation est revenu à son niveau initial, on libère la bille en actionnant le robinet 14 pour la positionner en 16, et on l'introduit au centre du four 19 dont la température est à 35°C pour des expériences en rampe linéaire de température.

Les gaz extraits sont alors entraînés vers le four réducteur 21 et la chambre d'ionisation 23 comme précédemment.

Dans le four 19, la bille 16 subit une montée linéaire en température, depuis la température de 35°C avec une vitesse de chauffage de 1°C/min. On effectue alors une mesure de la quantité de tritium contenu dans le gaz vecteur toutes les minutes.

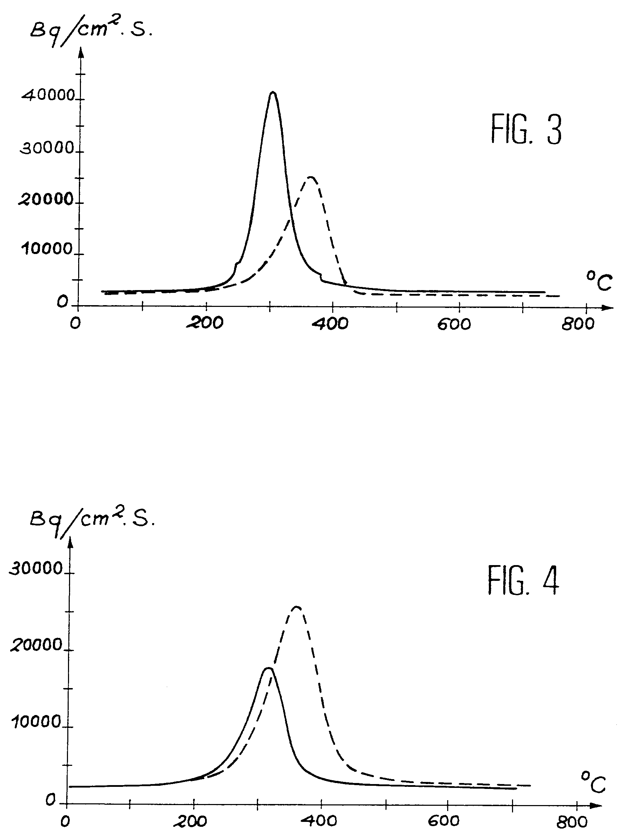

La figure 3 illustre les résultats obtenus dans le cas du matériau céramique de l'exemple 1 et du matériau céramique $Li_2ZrO_3$ de l'exemple 3 comparatif.

Sur cette figure, la courbe en trait plein représente les résultats obtenus avec le zirconate de lithium dopé à 8 % de cuivre (ex 1) tandis que la courbe en tirets représente le résultat obtenu dans le cas du zirconate de lithium stoechiométrique (ex 3). Ces courbes illustrent les variations de l'activité en tritium (en $Bq/cm^2.s$) en fonction de la température (en °C).

On remarque ainsi une forte diminution de la température d'extraction du tritium qui est de 303 °C pour le zirconate de lithium dopé à 8 % au lieu de 359°C pour le zirconate de lithium stoechiométrique.

La présence de cuivre améliore donc la capacité de la céramique au relâchement du tritium.

La figure 4 illustre les résultats obtenus pour le matériau céramique de l'exemple 2 et le zirconate de lithium stoechiométrique de l'exemple 3 comparatif.

Sur cette figure la courbe en trait plein se rapporte au zirconate de lithium dopé par 5 % de Cu de l'exemple 2, la courbe en tirets se rapporte à $Li_2ZrO_3$ de l'exemple 3 comparatif.

Sur cette figure, on remarque que le dopage par du cuivre (5 %) permet d'obtenir un maximum de relâchement à une température de 315°C qui est bien inférieure à la température de 352°C pour le zirconate de lithium stoechiométrique, soit un gain de 37°C.

L'abaissement est moins fort que dans le cas de zirconate de lithium dopé par 8 % de cuivre, mais cette amélioration reste nette et la substitution par le cuivre engendre un domaine de solution solide susceptible de conserver la stabilité structurale du matériau céramique au cours de la consommation du lithium.

Les matériaux céramiques de l'invention sont donc très intéressants pour une utilisation comme matériau tritigène, notamment dans un réacteur de fusion thermonucléaire, car ils permettent une récupération du tritium à des températures relativement basses.

**Revendications**

1. Matériau céramique constitué de zirconate de lithium substitué par du cuivre en quantité telle que le matériau soit sous la forme d'une solution solide de type $Li_2ZrO_3$.

2. Matériau selon la revendication 1, caractérisé' en ce que sa composition en $Li_2O$, $ZrO_2$ et CuO est située à l'intérieur de la zone hachurée du diagramme ternaire représenté sur la figure 1.

3. Matériau selon la revendication 2, caractérisé en ce qu'il répond à la formule :

$$Li_{2(1-x/3)} Zr_{(1-x/3)} Cu_x O_3 \text{ avec } O < x \leq 0,08$$

4. Matériau selon la revendication 2, caractérisé en ce qu'il répond à la formule :

$$Li_2 Zr Cu_y O_{3+y} \text{ avec } 0 < y \leq 0,06.$$

5. Matériau tritigène pour réacteur de fusion thermonucléaire, caractérisé en ce qu'il est constitué par un matériau céramique selon l'une quelconque des revendications 1 à 4.

FIG. 1

FIG. 2

Bq/cm². S.

FIG. 3

Bq/cm². S.

FIG. 4

8

EP 0 742 181 A1

**Office européen des brevets**

**RAPPORT DE RECHERCHE EUROPEENNE**

Numero de la demande

EP 96 40 0987

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | ZEITSCHRIFT FÜR KRISTALLOGRAPHIE, vol. 190, no. 3-4, 1990, pages 161-162, XP002011399 1. CASTELLANOS, M.CHAVEZ MARTINEZ: "New family of phases, LiMXO4" * page 163; tableaux 1,2 * | 1-4 | C04B35/486 G21B1/00 C01G25/00 |
| Y | | 5 | |
| Y | EP-A-0 333 041 (TOSOH CORPORATION) * le document en entier * | 5 | |
| Y | FR-A-2 641 774 (STUDIECENTRUM FÜR KERNENERGIE) * le document en entier * | 5 | |

|  | DOMAINES TECHNIQUES RECHERCHES (Int.Cl.6) |
|---|---|
|  | C04B G21B C01G |

Le présent rapport a été établi pour toutes les revendications

| Lieu de la recherche | Date d'achèvement de la recherche | Examinateur |
|---|---|---|
| LA HAYE | 22 Août 1996 | Luethe, H |

EPO FORM 1503 03.82 (P04C02)